# EUROPEAN PATENT APPLICATION

(11) **EP 4 082 700 A1**
(43) Date of publication of application: **02.11.2022**
(21) Application number: 21750939.7
(22) Date of filing: 05.02.2021
(51) Int. Cl.: B23B 27/14, B23C 5/20, B23P 15/28, B23B 51/00, B23K 26/356

(54) **METHOD FOR MANUFACTURING CUTTING TOOL**

(30) Priority: 05.02.2020 JP 2020017887; 02.02.2021 JP 2021015304
(71) Applicant: Mitsubishi Materials Corporation, Tokyo 100-8117 (JP)
(72) Inventor: KUBO, Takuya, Naka-shi, Ibaraki 311-0102 (JP); TAKABE, Ryota, Naka-shi, Ibaraki 311-0102 (JP)
(74) Representative: Gille Hrabal Partnerschaftsgesellschaft mbB Patentanwälte
(86) International application number: PCT/JP2021/004403
(87) International publication number: WO 2021/157716

(57) **Abstract**

A method for manufacturing a cutting tool (10) includes: the cutting tool (10) including a tool body (1) made of a sintered alloy, a hard coating (2) which is disposed on an outer surface of the tool body (1) and has at least a layer formed of any of a carbide, a nitride, and a carbonitride, or a composite compound thereof, and a cutting edge (3) which is formed at a ridge portion of the tool body (1) and includes a portion of the hard coating (2) located at the ridge portion, a laser peening step of directly irradiating the hard coating (2) with a pulsed laser (L) having a pulse width of 100 ps or less to apply compressive residual stress to the hard coating (2) and a surface region of the tool body (1).

## Description

### TECHNICAL FIELD

The present invention relates to a method for manufacturing a cutting tool, and more particularly to a post-treatment method for improving the fracture resistance of a cutting edge of a cutting tool.

Priority is claimed on Japanese Patent Application No. 2020-017887, filed February 5, 2020, and Japanese Patent Application No. 2021-015304, filed February 2, 2021, the contents of which are incorporated herein by reference.

### BACKGROUND ART

In a cutting tool in which a tool body made of cemented carbide is coated with a hard coating, a technique is known in which tensile residual stress of the hard coating or the tool body is released by a post-treatment, or compressive residual stress is applied to improve the fracture resistance of a cutting edge. For example, Patent Document 1 discloses a method of controlling residual stress by an impact force generated by allowing submillimeter-order steel balls to collide with a tool surface in shot peening. Patent Document 2 discloses a surface treatment method of irradiating a nanosecond laser to reduce the tensile stress of a TiCN hard coating or to apply compressive stress. As in Patent Document 3, a technique is also known in which the propagation of minute cracks can be suppressed by causing the residual stress value in a direction parallel to the ridge portion of a cutting edge to be larger than the residual stress value in a direction orthogonal to the ridge portion of the cutting edge, and as a result, the fracture resistance of the cutting edge is improved. Patent Document 4 discloses a method of applying compressive residual stress to a base material made of cemented carbide by performing so-called nanosecond laser peening using a high-energy nanosecond laser having a pulse width of about several ns and a pulse energy of several hundred mJ.

### [Citation List]

### [Patent Documents]

[Patent Document 1]
   Japanese Unexamined Patent Application, First Publication No. H06-108258
[Patent Document 2]
   Japanese Unexamined Patent Application, First Publication No. 2012-223808
[Patent Document 3]
   Japanese Unexamined Patent Application, First Publication No. 2018-183862
[Patent Document 4]
   Published Japanese Translation No. 2020-525301 of the PCT International Publication

### SUMMARY OF INVENTION

### Technical Problem

In the method of Patent Document 1, the compressive residual stress of a hard phase of a hard coating or the surface layer of the tool body can be increased by adjusting the material and size of the media, or by increasing the projecting pressure and projecting time of shot peening. However, when too high compressive residual stress is applied, peeling of the hard coating and the generation vertical cracks that become the origin of defects during the use of the tool become significant, and local compressive stress around the vertical cracks is released. Therefore, there is a problem that the residual stress varies greatly for each product lot and it becomes difficult to apply compressive residual stress higher than a certain value. Here, the vertical crack is a crack that divides the hard coating or the surface layer of the tool body, and a gap having a width of about several hundred nm is generated. Vertical cracks release compressive residual stress in a direction perpendicular to the film thickness (surface direction), which is not preferable. According to Patent Document 1, the maximum value at which compressive residual stress can be stably applied by shot peening is described as about -200 MPa for the hard coating (TiC) and about -800 MPa for the tool body (WC) (compression is considered negative).

In the method of Patent Document 2, an oxide layer (Al₂O₃) which is an upper layer of the hard coating is removed by using the nanosecond laser, and a compressive residual stress of up to about 1 GPa is applied to a non-oxide layer (TiCN) which is a lower layer of the hard coating. This mechanism is not mentioned in the specification of Patent Document 2, but is considered to be a kind of so-called laser peening because the lower layer is impacted by the mechanical reaction that occurs when the oxide layer is instantaneously removed in a time on the order of nanoseconds and the oxide layer is scattered by fine particles, plasma, or the like. According to examples of Patent Document 2, a compressive residual stress of about 1 GPa can be applied to the lower layer (TiCN) at a peak power density (0.02 GW/cm²) close to the lower limit at which the oxide layer can be removed. However, when a higher peak power density is applied, the compressive residual stress of the lower layer is conversely decreased. It is considered that the reason for this is that the compressive residual stress is released by the effect of heat due to the excessive laser beam hitting the lower layer. However, at a low peak power density of about 0.02 GW/cm² as in Patent Document 2, the effect of applying compressive residual stress to the surface layer of the tool body immediately under the hard coating can hardly be obtained. That is, the fracture resistance of the tool body cannot be improved.

In Patent Document 3, although a difference is provided between the residual stress value in the direction orthogonal to the ridge portion of the cutting edge made of α-Al₂O₃ and the residual stress value in the direction parallel to the ridge portion of the cutting edge by the shot peening, the media are uniformly projected against the rake face during the shot peening, so that it is difficult to stably apply a large residual stress difference.

In the nanosecond laser peening of Patent Document 4, it is generally necessary to perform the treatment in a state in which the tool is installed in water in order to increase an impact force. However, in this case, the beam is scattered due to fluctuations in the water surface and bubbles generated in the laser-irradiated portion, and the residual stress of an edge tip varies for each tool, so that there is a problem that the stability of the tool performance as a product is lowered. Another problem is that the process is complicated due to the treatment in water, the need to apply a heat protective layer, and the like.

In view of the above circumstances, an object of the present invention is to provide a method for manufacturing a cutting tool in which a high compressive residual stress can be stably applied to a hard coating and a tool body, thereby improving the fracture resistance of a cutting edge.

### Solution to Problem

According to an aspect of the present invention, there is provided a method for manufacturing a cutting tool, in which the cutting tool includes a tool body made of a sintered alloy, a hard coating which is disposed on an outer surface of the tool body and has at least a layer formed of any of a carbide, a nitride, and a carbonitride, or a composite compound thereof, and a cutting edge which is formed at a ridge portion of the tool body and includes a portion of the hard coating located at the ridge portion, the method including: a laser peening step of directly irradiating the hard coating with a pulsed laser having a pulse width of 100 ps or less to apply compressive residual stress to the hard coating and a surface region of the tool body.

In the method for manufacturing a cutting tool according to the above aspect, the cutting tool in which the hard coating is formed on the outer surface of the tool body is irradiated with a short pulsed laser having a pulse width of 100 ps (picosecond) or less at a peak power density of desirably 1 TW (terawatt)/cm² or more, for example, in the air from above the hard coating. This treatment is so-called ultrashort pulsed laser peening, and is a technique of applying compressive residual stress to the surface of a workpiece (cutting tool) by generating a shock wave in the workpiece by the mechanical reaction that occurs when a plasma generated by slightly processing the surface of the workpiece subjected to laser irradiation is explosively diffused, and thus applying plastic deformation and crystal defects such as dislocations. In the above aspect of the present invention, by performing the laser peening under the above laser conditions, it is possible to stably apply compressive residual stress while suppressing the occurrence of vertical cracks in the hard coating and the tool body. In addition, by setting the pulse width to 100 ps or less, the effect of heat due to the laser irradiation is significantly suppressed, so that the peak power density, that is, the energy of the shock wave can be increased. Accordingly, for example, a residual stress of 0 or less to the layer (the layer formed of any of a carbide, a nitride, and a carbonitride, or a composite compound thereof) contributing to the fracture resistance of the hard coating, and -1000 MPa or less to WC particles of the surface region of the tool body, that is, a compressive residual stress can be applied.

As described above, according to the method for manufacturing a cutting tool in the above aspect, a high compressive residual stress can be applied to both the hard coating and the tool body while suppressing the occurrence of vertical cracks by the laser peening step under the special laser conditions. Accordingly, the fracture resistance of the cutting edge can be improved. Good cutting accuracy is maintained and the tool life is extended.

Furthermore, since the compressive residual stress can be stably applied, variation in the quality of the cutting tool can be suppressed. In addition, since the laser irradiation can be performed in the air and pre- and post-treatment steps are not particularly required, compared to a generally known stress control technique such as wet blasting, in the present invention, the treatment can be performed easily and at high speed, and the productivity is improved.

In the method for manufacturing a cutting tool, it is preferable that in the laser peening step, the hard coating is irradiated with a pulsed laser having a pulse width of 10 ps or less.

In this case, for example, it is possible to apply a residual stress of -1000 MPa or less to the hard coating and -1500 MPa or less to the surface region of the tool body, that is, a higher compressive residual stress.

In the method for manufacturing a cutting tool, it is preferable that in the laser peening step, the hard coating is irradiated with a pulsed laser having a pulse width of 10 fs or more.

In this case, since the hard coating is irradiated with a short pulsed laser having a pulse width of 10 fs (femtosecond) or more from above, an excessive decrease in the pulse width is suppressed, and the time for applying an impact to the workpiece is secured. Therefore, the impact due to the laser irradiation stably reaches the deep part of the workpiece. High compressive residual stress can be stably applied not only to the hard coating but also the surface region of the tool body.

In the method for manufacturing a cutting tool, it is preferable that in the laser peening step, anisotropy is applied to the compressive residual stress of the hard coating and the tool body in a direction parallel to the cutting edge and in a direction orthogonal to the cutting edge.

In the method for manufacturing a cutting tool, it is preferable that in the laser peening step, a pulsed laser irradiation point interval in the direction parallel to the cutting edge and a pulsed laser irradiation point interval in the direction orthogonal to the cutting edge are caused to be different from each other.

In this case, anisotropy can be applied to the compressive residual stress of the hard coating and the tool body. That is, a difference of a predetermined value or more can be provided between the compressive residual stress value in the direction parallel to the cutting edge and the compressive residual stress value in the direction orthogonal to the cutting edge. For example, unlike the above configuration, compared to a case where the compressive residual stress value is increased as a whole by causing the pulsed laser irradiation point interval in the direction parallel to the cutting edge and the pulsed laser irradiation point interval in the direction orthogonal to the cutting edge to be the same value and a narrow pitch (a case where isotropy is applied), according to the above configuration of the present invention, damage to the hard coating can be suppressed, and the fracture resistance required for the cutting edge can be efficiently applied depending on the kind of cutting, the work material, and the like.

Specifically, by causing the pulsed laser irradiation point interval in the direction parallel to the cutting edge to be smaller than the pulsed laser irradiation point interval in the direction orthogonal to the cutting edge, the compressive residual stress in the direction parallel to the cutting edge can be higher than the compressive residual stress in the direction orthogonal to the cutting edge (the absolute value of the residual stress can be increased). In this case, for example, it is possible to suppress the propagation of so-called thermal cracks in the direction orthogonal to the cutting edge.

Alternatively, by causing the pulsed laser irradiation point interval in the direction orthogonal to the cutting edge to be smaller than the pulsed laser irradiation point interval in the direction parallel to the cutting edge, the compressive residual stress in the direction orthogonal to the cutting edge can be higher than the compressive residual stress in the direction parallel to the cutting edge. In this case, for example, it is possible to suppress the propagation of so-called intermittent cracks in the direction parallel to the cutting edge.

In the method for manufacturing a cutting tool, it is preferable that in the laser peening step, the spot diameter of the pulsed laser irradiating the hard coating is set to 10 µm or more and 200 µm or less.

When the spot diameter is 10 µm or more, local damage or peeling of the hard coating is less likely to occur during laser irradiation. When the spot diameter is 200 µm or less, it is possible to suppress a decrease in the value of the compressive residual stress applied to the hard coating and the surface of the tool body. By setting the spot diameter to 20 µm or more and 100 µm or less, the above-mentioned effect can be made more remarkable, which is more desirable.

In the method for manufacturing a cutting tool, in the laser peening step, there are two methods, one is to scan the pulsed laser in the direction parallel to the cutting edge, and the other is to scan the pulsed laser in the direction orthogonal to the cutting edge. However, from the viewpoint of quality, it is preferable to perform scanning with the pulsed laser in the direction orthogonal to the cutting edge.

For example, compared to the case where the pulsed laser is scanned in the direction parallel to the cutting edge, according to the above configuration of the present invention, there are cases where damage to the hard coating is suppressed, and a higher compressive residual stress can be applied. In order to further suppress the damage to the hard coating, it is preferable that the pulsed laser is scanned in a direction that approaches the cutting edge from the position away from the cutting edge, that is, from the rake face side toward the cutting edge in the direction orthogonal to the cutting edge.

### ADVANTAGEOUS EFFECTS OF INVENTION

According to the method for manufacturing a cutting tool according to one aspect of the present invention, a high compressive residual stress can be stably applied to a hard coating and a tool body, thereby improving the fracture resistance of a cutting edge.

### BRIEF DESCRIPTION OF DRAWINGS

Fig. 1 is a perspective view showing a cutting tool of the present embodiment, and is a view describing a laser peening step.
Fig. 2 is an enlarged cross-sectional view showing the vicinity of a cutting edge of the cutting tool of the present embodiment.
Fig. 3 is an enlarged top view showing the vicinity of a straight edge portion of the cutting edge of the cutting tool of the present embodiment, and is a view describing the laser peening step.
Fig. 4 is an enlarged top view showing the vicinity of a corner edge portion of the cutting edge of the cutting tool of the present embodiment, and is a view describing the laser peening step.
Fig. 5 is a perspective view describing a laser peening step of a modification example of the present embodiment.
Fig. 6 is a partial top view describing a laser peening step of a modification example of the present embodiment.
Fig. 7 is a graph showing the relationship between a peak power density of the laser peening step and residual stress applied to a tool body in examples.
Fig. 8 is a graph showing the relationship between peak power density of the laser peening step and the residual stress applied to a hard coating in the examples.

### DESCRIPTION OF EMBODIMENTS

A cutting tool 10 according to an embodiment of the present invention and a method for manufacturing the cutting tool 10 will be described with reference to the drawings. The cutting tool 10 of the present embodiment is a cutting insert. The cutting tool 10 of the present embodiment is used, for example, for an edge tip replaceable insert holder for turning a work material.

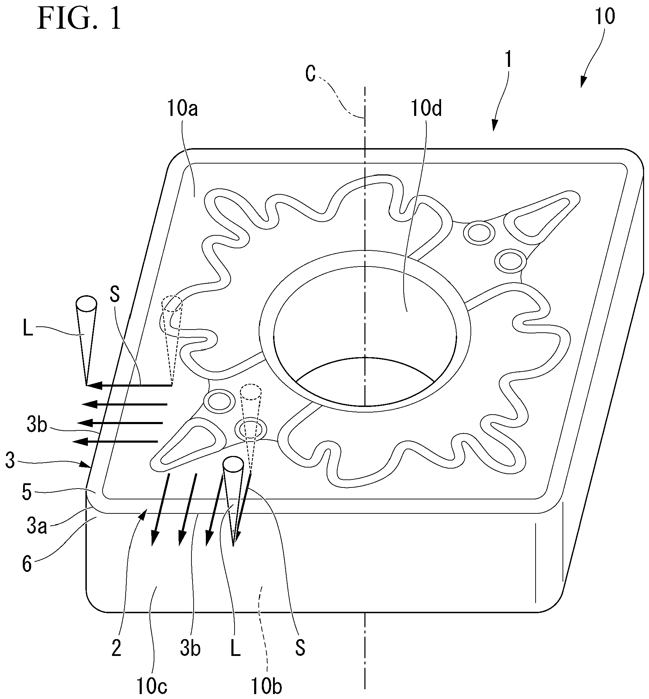

As shown in Fig. 1, the cutting tool 10 of the present embodiment has a plate shape. Specifically, the cutting tool 10 has a polygonal plate shape, and in the shown example, has a quadrangular plate shape. The cutting tool 10 may have a polygonal plate shape other than the quadrangular plate shape, a disk shape, or the like.

In the present embodiment, the direction in which a center axis C of the cutting tool 10 extends, that is, the direction parallel to the center axis C is referred to as an axial direction. In a plan view of the cutting tool 10, the center axis C is located at the center of the cutting tool 10. The center axis C extends along the thickness direction of the cutting tool 10.

The direction orthogonal to the center axis C is called a radial direction. In the radial direction, the direction approaching the center axis C is called a radially inward side, and the direction away from the center axis C is called a radially outward side.

The direction about the center axis C is called a peripheral direction.

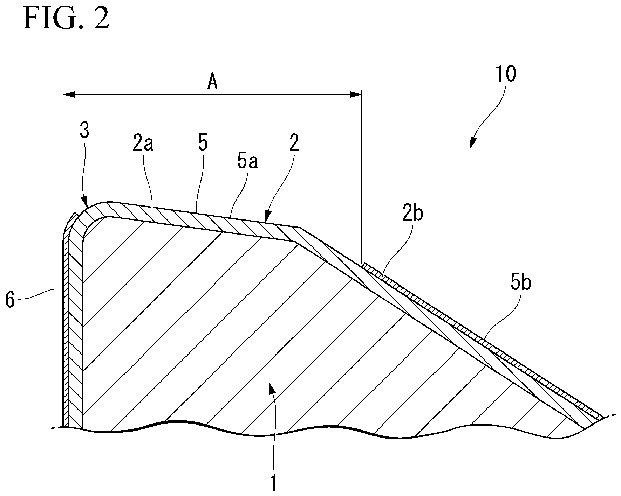

As shown in Fig. 2, the cutting tool 10 of the present embodiment includes a tool body 1 made of a sintered alloy, a hard coating 2 which is disposed on the outer surface of the tool body 1 and has a layer (a first layer 2a, which will be described later) formed of any of a carbide, a nitride, and a carbonitride, or a composite compound thereof, and a cutting edge 3 which is formed at the ridge portion of the tool body 1 and includes a portion of the hard coating 2 located at the ridge portion. That is, the cutting tool 10 of the present embodiment is a cutting insert in which the tool body 1 is coated with the hard coating 2. As shown in Fig. 1, the cutting tool 10 includes a pair of plate surfaces 10a and 10b, an outer peripheral surface 10c, and a through-hole 10d.

The pair of plate surfaces 10a and 10b have a polygonal shape and face the axial direction of the center axis C. In the present embodiment, the pair of plate surfaces 10a and 10b each have a quadrangular shape. The pair of plate surfaces 10a and 10b has one plate surface (front surface) 10a and the other plate surface (back surface) 10b. The one plate surface 10a and the other plate surface 10b are disposed apart from each other in the axial direction and face opposite to each other in the axial direction.

In the present embodiment, in the axial direction, the direction from the other plate surface 10b toward the one plate surface 10a is called one side in the axial direction, and the direction from the one plate surface 10a toward the other plate surface 10b is called the other side in the axial direction.

Of the pair of plate surfaces 10a and 10b, in at least one plate surface 10a, a part (corner portion or the like) of the plate surface 10a faces a work material (not shown) during cutting.

Of the pair of plate surfaces 10a and 10b, at least one plate surface 10a has a rake face 5. The rake face 5 forms at least a part of the plate surface 10a. In the present embodiment, the rake face 5 is disposed at least each of two corner portions of the four corner portions located on the peripheral edge portion of the plate surface 10a. The two corner portions are disposed at positions with 180-degree rotational symmetry about the center axis C.

As shown in Fig. 2, the rake face 5 has a land portion 5a and an inclined portion 5b.

The land portion 5a is a portion of the rake face 5 connected to the cutting edge 3. The land portion 5a is disposed on the radially inward side of the cutting edge 3. In the present embodiment, the land portion 5a is an inclined surface that inclines toward the other side in the axial direction as it goes toward the radially inward side from the cutting edge 3. The land portion 5a may have a flat plate shape extending in a direction perpendicular to the center axis C.

The inclined portion 5b is a portion of the rake face 5 located on the radially inward side of the land portion 5a. The inclined portion 5b is connected to the radially inner end portion of the land portion 5a. The inclined portion 5b is an inclined surface that inclines toward the other side in the axial direction as it goes toward the radially inward side from the land portion 5a. The amount of displacement in the axial direction of the inclined portion 5b per unit length along the radial direction is larger than the amount of displacement in the axial direction of the land portion 5a per unit length along the radial direction. That is, the inclination of the inclined portion 5b with respect to a virtual plane (not shown) perpendicular to the center axis C is larger than the inclination of the land portion 5a with respect to the virtual plane.

As shown in Fig. 1, the outer peripheral surface 10c is connected to the pair of plate surfaces 10a and 10b and faces the radially outward side. Both end portions of the outer peripheral surface 10c in the axial direction are connected to the pair of plate surfaces 10a and 10b. Specifically, the end portion of the outer peripheral surface 10c on one side in the axial direction is connected to the one plate surface 10a. The end portion of the outer peripheral surface 10c on the other side in the axial direction is connected to the other plate surface 10b. The outer peripheral surface 10c extends over the entire peripheral region of the cutting tool 10.

The outer peripheral surface 10c has a flank face 6. The flank face 6 forms at least a part of the outer peripheral surface 10c. The flank face 6 is disposed in a portion of the outer peripheral surface 10c adjacent to each rake face 5.

The through-hole 10d passes through the cutting tool 10 in the axial direction. The through-hole 10d opens to the pair of plate surfaces 10a and 10b and extends in the axial direction. The center axis of the through-hole 10d is disposed coaxially with the center axis C. In the shown example, the through-hole 10d has a circular hole shape. For example, a clamp screw (not shown) or the like is inserted into the through-hole 10d.

The cutting edge 3 is formed at a ridge portion where the rake face 5 and the flank face 6 are connected to each other, that is, an intersecting ridge portion between the rake face 5 and the flank face 6. In the present embodiment, the cutting edge 3 is disposed at least each of two corner portions of the four corner portions located on the peripheral edge portion of the plate surface 10a. As shown in Fig. 2, in the present embodiment, the cutting edge 3 is subjected to round honing. The cutting edge 3 may also be subjected to chamfer honing.

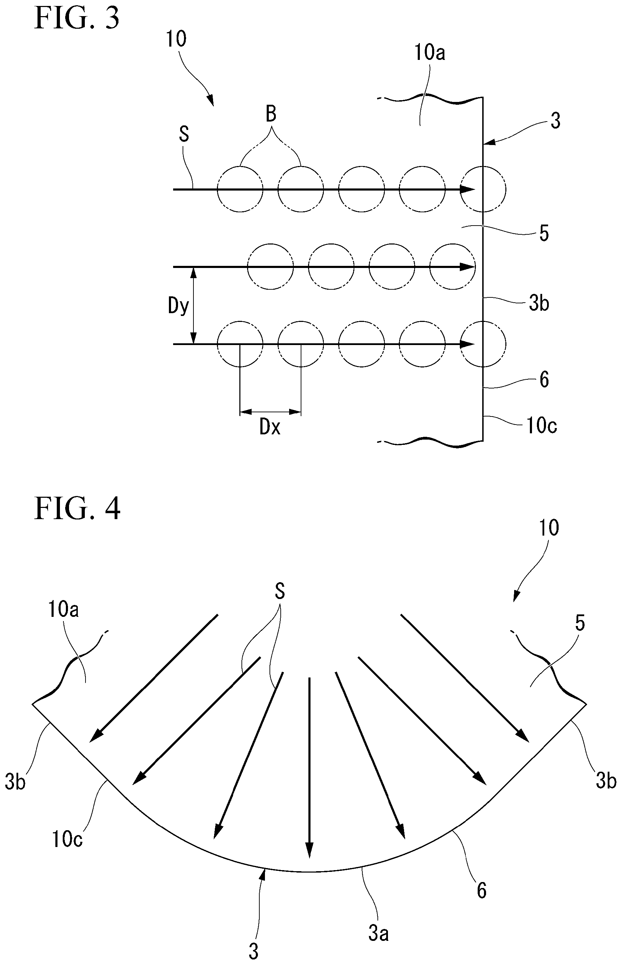

As shown in Figs. 1 and 4, the cutting edge 3 has a corner edge portion 3a and a pair of straight edge portions 3b. The corner edge portion 3a has a convex curved shape that protrudes toward the radially outward side. The straight edge portions 3b have a straight line shape and are connected to the corner edge portion 3a. In the present embodiment, the pair of straight edge portions 3b are connected to both end portions of the corner edge portion 3a in an edge length direction. The edge length direction is the direction in which the cutting edge 3 extends, and specifically, the direction in which the edge portions 3a and 3b of the cutting edge 3 extend. The corner edge portion 3a and the pair of straight edge portions 3b are substantially V-shaped as a whole when viewed in the axial direction.

The cutting edge 3 is formed of the ridge portion (the intersecting ridge portion) of the tool body 1 and a portion of the hard coating 2 coating the ridge portion.

As shown in Fig. 1, the tool body 1 has the same shape as the cutting tool 10 described above. The tool body 1 is made of a sintered alloy having a hard phase of at least one of a carbide or a nitride of Group 4a, 5a, and 6a metals of the periodic table and a mutual solid solution thereof, and Ni, Co, or a Ni-Co alloy. The tool body 1 is formed mainly of the hard phase and Ni, Co, or the Ni-Co alloy. In the present embodiment, the tool body 1 is made of a WC-based cemented carbide. The tool body 1 may be made of a TiC-based or Ti(C,N)-based cermet.

Through a laser peening step, which will be described later, the residual stress in a surface region of the tool body 1 is, for example, -1000 MPa or less, and preferably - 1500 MPa or less. The surface region (surface layer) of the tool body 1 may be a region from the surface of the tool body 1 to a depth of at least 1 µm.

As shown in Fig. 2, the hard coating 2 is formed on at least a part of the outer surface of the tool body 1 by a chemical vapor deposition method or a physical vapor deposition method. The hard coating 2 is disposed on the outer surface of the tool body 1 in a region including at least the cutting edge 3. In the present embodiment, the hard coating 2 is disposed on at least the cutting edge 3, the rake face 5, and the flank face 6. The hard coating 2 may be formed on the entire outer surface of the tool body 1.

The film thickness of the hard coating 2 is, for example, 1 µm or more and 30 µm or less as a whole. The hard coating 2 is formed of a single layer or a plurality of layers. In the present embodiment, the hard coating 2 is formed of a plurality of layers laminated on the outer surface of the tool body 1. The hard coating 2 has the first layer 2a located on the outer surface of the tool body 1 and a second layer 2b located on the first layer 2a. The hard coating 2 may have a third layer (not shown) located on the second layer 2b. Furthermore, the hard coating 2 may be formed of four or more layers. Of the plurality of layers of the hard coating 2, the thickest layer is the first layer 2a. In a case where the hard coating 2 is a single layer, the hard coating 2 has the first layer 2a. That is, the hard coating 2 has at least the first layer (layer) 2a. The film thickness of the first layer 2a is, for example, 1 µm or more and 20 µm or less.

Through the laser peening step described later, the residual stress of the hard coating 2, specifically, the residual stress of the first layer 2a is 0 MPa or less (that is, the compressive residual stress is applied), and preferably -1000 MPa or less.

The first layer 2a is disposed on the outer surface of the tool body 1 directly or indirectly with an intermediate layer (not shown) interposed therebetween. The first layer 2a is formed of any of a carbide, a nitride, and a carbonitride, or a composite compound thereof. The first layer 2a is, for example, a TiCN layer or the like. The TiCN layer subjected to the laser peening step described later improves the fracture resistance of the cutting edge 3.

The second layer 2b is disposed on the outer surface of the first layer 2a directly or indirectly with an intermediate layer (not shown) interposed therebetween. The second layer 2b is formed of a carbide, a nitride, a carbonitride, an oxide, or a boride of Group 4a, 5a, and 6a metals of the periodic table, a carbide, a nitride, or a carbonitride of Si, an oxide or a nitride of Al, a mutual solid solution thereof, diamond, cubic boron nitride, or the like. Since the second layer 2b is not limited by the film type of the first layer 2a of the hard coating 2, those generally used as a hard coating for a cutting tool are listed here. The second layer 2b is, for example, an Al₂O₃ layer or a TiN layer. Alternatively, the second layer 2b may be an Al₂O₃ layer, and the third layer (not shown) may be a TiN layer. By providing the Al₂O₃ layer, the heat resistance and wear resistance of the rake face 5 and the cutting edge 3 are improved. By providing the TiN layer, the external appearance of the cutting tool 10 is enhanced, and whether or not the cutting tool 10 has been used, that is, whether the cutting tool 10 has been used or not can be easily identified.

In the example shown in Fig. 2, a portion of the second layer 2b irradiated with a pulsed laser L, which will be described later, has disappeared. The pulsed laser L is irradiated over the radially outer end portion of the inclined portion 5b, the land portion 5a, and the cutting edge 3. Therefore, the second layer 2b is disposed at a portion other than the radially outer end portion of the inclined portion 5b, the land portion 5a, and the cutting edge 3. The second layer 2b may remain on the radially outer end portion of the inclined portion 5b, the land portion 5a, and the cutting edge 3 after the irradiation with the pulsed laser L.

Next, a method for manufacturing the cutting tool 10 will be described.

The method for manufacturing the cutting tool 10 of the present embodiment includes a sintering step, a film forming step, and the laser peening step.

In the sintering step, a green compact in the shape of the tool body 1, that is, an intermediate formed body formed by compacting in the manufacturing process of the tool body 1 is sintered. In the present embodiment, the green compact has a plate shape, specifically, a polygonal plate shape.

In the film forming step, the hard coating 2 having a layer formed of any of a carbide, a nitride, and a carbonitride, or a composite compound thereof is formed on the outer surface of the sintered tool body 1. That is, in the film forming step, the hard coating 2 having at least the first layer 2a is formed on the outer surface of the tool body 1. In the present embodiment, the first layer 2a is formed on the outer surface of the tool body 1 directly or indirectly with an intermediate layer (not shown) interposed therebetween, and the second layer 2b is formed on the first layer 2a directly or indirectly with an intermediate layer (not shown) interposed therebetween. Although not particularly shown, the third layer may be formed on the second layer 2b directly or indirectly with an intermediate layer interposed therebetween. Alternatively, the hard coating 2 formed of four or more layers including the first layer 2a, the second layer 2b, and the third layer may be formed.

As shown in Fig. 1, in the laser peening step, the hard coating 2 is irradiated with a pulsed laser L having a pulse width of 100 ps (picosecond) or less. Preferably, in the laser peening step, the hard coating 2 is irradiated with a pulsed laser L having a pulse width of 10 ps or less. More desirably, in the laser peening step, the hard coating 2 is irradiated with a pulsed laser L having a pulse width of 2 ps or less.

More preferably, in the laser peening step, the hard coating 2 is irradiated with a pulsed laser L having a pulse width of 10 fs (femtosecond) or more. More desirably, in the laser peening step, the hard coating 2 is irradiated with a pulsed laser L having a pulse width of 500 fs or more.

The peak power density of the pulsed laser L is preferably 1 TW (terawatt)/cm² or more, more preferably 5 TW/cm² or more, and even more desirably 20 TW/cm² or more. As described above, by applying an impact at 1 TW (terawatt)/cm² or more, high compressive residual stress can be stably applied to the tool body 1 and the hard coating 2. More preferably, the peak power density is 10 PW (petawatt)/cm² or less. The reason is that plasma due to air breakdown is generated from around 10 PW (petawatt)/cm², and shields the laser beam.

As shown in Fig. 2, in the present embodiment, a range A covering the radially outer end portion of the inclined portion 5b, the land portion 5a, and the cutting edge 3 is irradiated with the pulsed laser L. Specifically, the range A of at least 100 µm from the cutting edge 3 to the rake face 5 is irradiated with the pulsed laser L. In the present embodiment, the hard coating 2 is directly irradiated with the pulsed laser L instead of being indirectly irradiated with a nanosecond laser through a sacrificial film as in Patent Document 4 (Published Japanese Translation No. 2020-525301 of the PCT International Publication). That is, in the present embodiment, no sacrificial film is provided on the hard coating 2. The reason why laser irradiation as in the present embodiment is possible is that there is no feedback (stress release) due to heat because an ultrashort pulsed laser of 100 ps or less is used. In the present embodiment, the process is simple and the shock wave easily propagates, so that high compressive residual stress can be efficiently applied.

Specifically, the range A is hatched by laser beam scanning using a galvano scanner and an fθ lens (not shown). The treatment atmosphere at this time is the air or a gas. The gas is, for example, an inert gas that suppresses oxidation. The laser beam is a pulsed laser L having a pulse width of 100 ps or less, and desirably, a laser beam adjusted by appropriately changing the pulse width and pulse energy so that the peak power density is 1 TW/cm² or more is used. The peak power density is a value calculated by pulse energy / (pulse width × spot area). It is appropriate that the spot diameter on the surface of the workpiece (the cutting tool 10) for the pulsed laser L is 10 µm or more and 200 µm or less. That is, in the laser peening step, it is preferable that the spot diameter of the pulsed laser L irradiating the hard coating 2 is 10 µm or more and 200 µm or less. When the spot diameter is 10 µm or more, local peeling of the hard coating 2 is less likely to occur during laser irradiation. When local peeling of the hard coating 2 occurs, the strength of the edge tip is significantly reduced. Therefore, it is necessary to suppress the occurrence of local peeling. When the spot diameter is 200 µm or less, it is possible to suppress a decrease in the value of the compressive residual stress applied to the hard coating 2 and the surface of the tool body 1. It is more desirable that the spot diameter is set to 20 µm or more and 100 µm or less.

In the present embodiment, in the laser peening step, anisotropy is applied to the compressive residual stress of the hard coating 2 and the tool body 1 in the direction parallel to the cutting edge 3 and the direction orthogonal to the cutting edge 3. Specifically, as shown in Fig. 3, in the laser peening step, a pulsed laser irradiation point interval Dy in the direction parallel to the cutting edge 3 and a pulsed laser irradiation point interval Dx in the direction orthogonal to the cutting edge 3 are different from each other. That is, the pulsed laser irradiation point interval Dy in the direction parallel to the cutting edge 3 may be smaller than the pulsed laser irradiation point interval Dx in the direction orthogonal to the cutting edge 3. Alternatively, the pulsed laser irradiation point interval Dx in the direction orthogonal to the cutting edge 3 may be smaller than the pulsed laser irradiation point interval Dy in the direction parallel to the cutting edge 3.

In the laser peening step, the pulsed laser L is scanned in the direction orthogonal to the cutting edge 3. Specifically, as shown in Fig. 3, a scanning direction S of the pulsed laser L is a direction orthogonal to the straight edge portion 3b of the cutting edge 3. In addition, as shown in Fig. 4, the scanning direction S of the pulsed laser L is a direction orthogonal to the corner edge portion 3a of the cutting edge 3.

Specifically, the scanning direction S is a direction that approaches the cutting edge 3 in the direction orthogonal to the cutting edge 3. In the present embodiment, the radially outer end portion of the inclined portion 5b, the land portion 5a, and the cutting edge 3 are scanned with the pulsed laser L in this order along the direction orthogonal to the cutting edge 3. That is, the pulsed laser L is scanned in a direction from the rake face 5 toward the cutting edge 3 in the direction orthogonal to the cutting edge 3.

A plurality of circles shown by the two-dot chain lines in Fig. 3 represent spots B on the surface of the workpiece for the pulsed laser L. These spots B may not overlap each other as shown in the figure, or may overlap each other. In addition, as shown in Fig. 3, the spots B are also located at the edge tip (end edge) of the cutting edge 3.

In the method for manufacturing the cutting tool 10 of the present embodiment described above, the cutting tool 10 in which the hard coating 2 is formed on the outer surface of the tool body 1 is irradiated with a short pulsed laser having a pulse width of 100 ps or less, for example, in the air from above the hard coating 2. This treatment is so-called ultrashort pulsed laser peening, and is a technique of applying compressive residual stress to the surface of a workpiece by generating a shock wave in the workpiece by the mechanical reaction that occurs when a plasma generated by slightly processing the surface of the workpiece (cutting tool 10) subjected to laser irradiation is explosively diffused, and thus applying plastic deformation and crystal defects such as dislocations. In the present embodiment, by performing the laser peening under the above laser conditions, it is possible to stably apply compressive residual stress while suppressing the occurrence of vertical cracks in the hard coating 2 and the tool body 1. In addition, by setting the pulse width to 100 ps or less, the effect of heat due to the laser irradiation is significantly suppressed, so that the peak power density, that is, the energy of the shock wave can be increased. Accordingly, for example, a residual stress of 0 or less to the first layer 2a, which is a layer contributing to the fracture resistance of the hard coating 2, and -1000 MPa or less to WC particles of the surface region of the tool body 1, that is, a compressive residual stress can be applied.

As described above, according to the present embodiment, a high compressive residual stress can be applied to both the hard coating 2 and the tool body 1 while suppressing the occurrence of vertical cracks by the laser peening step under the special laser conditions. Accordingly, the fracture resistance of the cutting edge 3 can be improved. Good cutting accuracy is maintained and the tool life is extended.

Furthermore, since the compressive residual stress can be stably applied, variation in the quality of the cutting tool 10 can be suppressed. In addition, since the laser irradiation can be performed in the air and pre- and post-treatment steps are not particularly required, compared to a generally known stress control technique such as wet blasting, in the present embodiment, the treatment can be performed easily and at high speed, and the productivity is improved.

In the present embodiment, it is preferable that in the laser peening step, the hard coating 2 is irradiated with a pulsed laser L having a pulse width of 10 ps or less.

In this case, for example, it is possible to apply a residual stress of -1000 MPa or less to the hard coating 2 and -1500 MPa or less to the surface region of the tool body 1, that is, a higher compressive residual stress.

More preferably, in the laser peening step, the hard coating 2 is irradiated with a pulsed laser L having a pulse width of 2 ps or less. In this case, for example, it is possible to apply a residual stress of -1500 MPa or less to the hard coating 2 and -2000 MPa or less to the surface region of the tool body 1, that is, a higher compressive residual stress.

In the present embodiment, it is preferable that in the laser peening step, the hard coating 2 is irradiated with a pulsed laser L having a pulse width of 10 fs or more.

In this case, an excessive decrease in the pulse width of the pulsed laser L is suppressed, and the time for applying an impact to the workpiece is secured. Therefore, the impact due to the laser irradiation stably reaches the deep part of the workpiece, that is, the surface region of the tool body 1 immediately under the hard coating 2. High compressive residual stress can be stably applied to both the hard coating 2 and the tool body 1. More preferably, in the laser peening step, the hard coating 2 is irradiated with a pulsed laser L having a pulse width of 500 fs or more. Accordingly, the above-mentioned effect becomes more remarkable.

In the present embodiment, in the laser peening step, anisotropy is applied to the compressive residual stress of the hard coating 2 and the tool body 1 in the direction parallel to the cutting edge 3 and in the direction orthogonal to the cutting edge 3. Specifically, in the laser peening step in the present embodiment, the pulsed laser irradiation point interval Dy in the direction parallel to the cutting edge 3 and the pulsed laser irradiation point interval Dx in the direction orthogonal to the cutting edge 3 are caused to be different from each other.

In this case, anisotropy can be applied to the compressive residual stress of the hard coating 2 and the tool body 1. That is, a difference of a predetermined value or more can be provided between the compressive residual stress value in the direction parallel to the cutting edge 3 and the compressive residual stress value in the direction orthogonal to the cutting edge 3. For example, unlike the above configuration, compared to a case where the compressive residual stress value is increased as a whole by causing the pulsed laser irradiation point interval Dy in the direction parallel to the cutting edge 3 and the pulsed laser irradiation point interval Dx in the direction orthogonal to the cutting edge 3 to be the same value and a narrow pitch (a case where isotropy is applied), according to the above configuration of the present embodiment, damage to the hard coating 2 can be suppressed, and the fracture resistance required for the cutting edge 3 can be efficiently applied depending on the kind of cutting, the work material, and the like.

Specifically, by causing the pulsed laser irradiation point interval Dy in the direction parallel to the cutting edge 3 to be smaller than the pulsed laser irradiation point interval Dx in the direction orthogonal to the cutting edge 3, the compressive residual stress in the direction parallel to the cutting edge 3 can be higher than the compressive residual stress in the direction orthogonal to the cutting edge 3 (the absolute value of the residual stress can be increased). In this case, for example, it is possible to suppress the propagation of so-called thermal cracks in the direction orthogonal to the cutting edge 3.

Alternatively, by causing the pulsed laser irradiation point interval Dx in the direction orthogonal to the cutting edge 3 to be smaller than the pulsed laser irradiation point interval Dy in the direction parallel to the cutting edge 3, the compressive residual stress in the direction orthogonal to the cutting edge 3 can be higher than the compressive residual stress in the direction parallel to the cutting edge 3. In this case, for example, it is possible to suppress the propagation of so-called intermittent cracks in the direction parallel to the cutting edge 3.

In the present embodiment, it is preferable that in the laser peening step, the spot diameter of the pulsed laser L irradiating the hard coating 2 is set to 10 µm or more and 200 µm or less.

When the spot diameter is 10 µm or more, local damage or peeling of the hard coating 2 is less likely to occur during laser irradiation. When the spot diameter is 200 µm or less, it is possible to suppress a decrease in the value of the compressive residual stress applied to the hard coating 2 and the surface of the tool body 1. By setting the spot diameter to 20 µm or more and 100 µm or less, the above-mentioned effect can be made more remarkable, which is more desirable.

In the present embodiment, in the laser peening step, the pulsed laser L is scanned in the scanning direction S, that is, in the direction orthogonal to the cutting edge 3.

For example, compared to a case where the pulsed laser L is scanned in the direction parallel to the cutting edge 3, according to the above configuration of the present embodiment, damage to the hard coating 2 is suppressed. In order to further suppress the damage to the hard coating 2, it is preferable that the pulsed laser L is scanned in a direction that approaches the cutting edge 3 from the position away from the cutting edge 3, that is, from the rake face 5 side toward the cutting edge 3 in the direction orthogonal to the cutting edge 3.

The present invention is not limited to the above-described embodiment, and changes and the like in the configuration can be made without departing from the gist of the present invention, for example, as described below.

In the above-described embodiment, in the laser peening step, anisotropy is applied to the compressive residual stress by causing the pulsed laser irradiation point interval Dy in the direction parallel to the cutting edge 3 and the pulsed laser irradiation point interval Dx in the direction orthogonal to the cutting edge 3 to be different from each other. However, the present invention is not limited thereto, and for example, anisotropy may be applied to the compressive residual stress by changing the peak power density in the direction orthogonal to the cutting edge 3, that is, in the scanning direction S of the pulsed laser L, or in the direction parallel to the cutting edge 3, that is, in a direction orthogonal to the scanning direction S of the pulsed laser L (for example, for each predetermined scanning unit) while setting the pulsed laser irradiation point intervals Dy and Dx to the same value (constant).

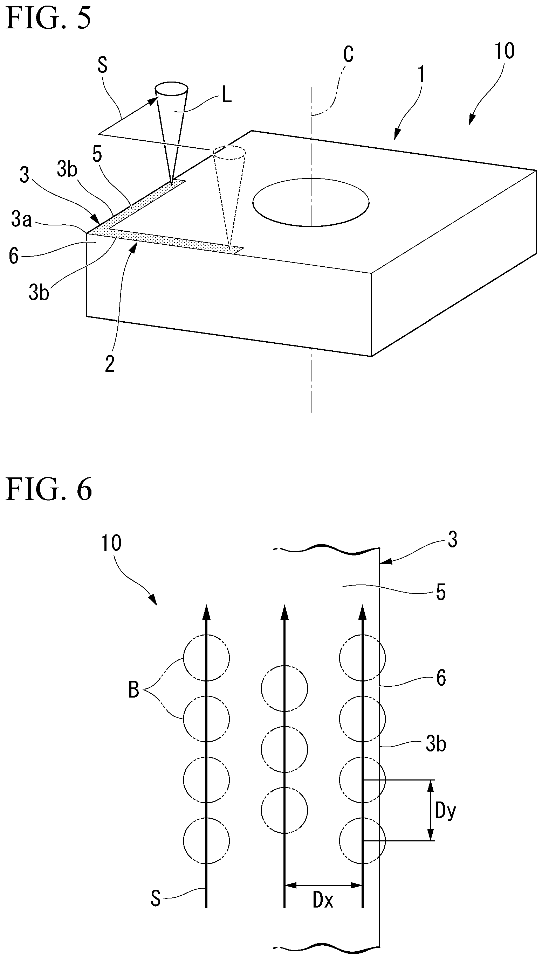

Figs. 5 and 6 are diagrams describing a laser peening step of a modification example of the above-described embodiment. In this modification example, in the laser peening step, the pulsed laser L is scanned in a direction parallel to the cutting edge 3. Specifically, the scanning direction S of the pulsed laser L is the direction parallel to the straight edge portion 3b and the corner edge portion 3a. Even in the laser scanning along the cutting edge 3 as described above, anisotropy in the compressive residual stress can be applied by, for example, changing the ratio between the pulsed laser irradiation point intervals Dy and Dx. Although not particularly shown, a nose portion (corner portion) of the cutting tool 10 is subjected to laser scanning in a curved shape along the corner edge portion 3a. At this time, the scanning speed becomes slow due to the curve. However, it is preferable to control the irradiation timing of the pulsed laser L according to the scanning speed so that the laser irradiation can be performed at a uniform density.

In the case of this modification example, since the scanning is performed along the cutting edge 3, the laser peening treatment can be performed at high speed, and the production efficiency of the cutting tool 10 is high. In addition, as shown in Fig. 6, it is easy to arrange spots B on the edge tip of the cutting edge 3, and it is easy to equalize the compressive residual stress in the vicinity of the edge tip.

In the above-described embodiment, the cutting tool 10 used for the edge tip replaceable insert holder is taken as an example, but the cutting tool 10 is not limited thereto. The cutting tool 10 may be used, for example, in an edge tip replaceable drill, an edge tip replaceable end mill, or the like for milling a work material.

In addition, the cutting tool 10 which is a cutting insert is taken as an example, but the cutting tool 10 is not limited thereto. The cutting tool 10 may be, for example, a solid type drill, an end mill, a reamer, or other cutting tools.

In addition, configurations (constituent elements) described in the above embodiment, the modification examples, and supplements may be combined, and additions, omissions, substitutions, and other changes can be made without departing from the gist of the present invention. Furthermore, the present invention is not limited to the above-described embodiment, but is limited only to the scope of claims.

### EXAMPLES

Hereinafter, the present invention will be specifically described with reference to examples. However, the present invention is not limited to the examples.

As the examples and comparative examples of the present invention, a plurality of laser-untreated cutting tools 10, that is, cutting inserts described in the above-described embodiment were prepared. Specifically, these cutting tools 10 were cutting inserts having a JIS standard CNMG120408 shape. The tool body 1 was made of a WC cemented carbide having a composition of 7.5 mass% of Co and an average WC particle size of 1.5 µm. As the hard coating 2, 4 µm of a TiCN layer as the first layer 2a, 1 µm of an Al₂O₃ layer as the second layer 2b, and 0.3 µm of a TiN layer as the third layer were formed on the outer surface of the tool body 1 in this order by a chemical vapor deposition (CVD) method.

In a post-step of this film formation, each cutting tool 10 was subjected to a laser treatment, that is, a laser peening step. Specifically, in the air, the rake face 5 of the cutting tool 10 was irradiated and scanned with a laser beam vertically, that is, in the axial direction such that the rake face 5 and the cutting edge 3 were subjected to the laser treatment. In all of the examples and comparative examples, no sacrificial film was formed on the hard coating 2, and the laser treatment was directly performed on the hard coating 2. The wavelength of the laser used was 1030 nm, the repetition rate was 10 kHz, the beam profile was Gaussian, and the spot diameter on the surface of the workpiece was ϕ30 µm.

Specifically, in order to investigate the relationship between the laser peak power density and the residual stress of each of the first layer 2a of the hard coating 2 and the surface region of and the tool body 1, the laser peening step was performed on each of the cutting tools 10 under different laser conditions. As for the laser conditions, the pulsed laser irradiation point intervals Dx and Dy were both set to 20 µm, the pulse width was adjusted in a range of 10 fs (femtosecond) to 10 ns (nanosecond), and the pulse energy was adjusted in a range of 0.4 mJ to 2 mJ, and the peak power density was changed in a range of 41 GW (gigawatt)/cm² to 5.66 PW (petawatt)/cm².

Among the above laser conditions, the cutting tools 10 irradiated with a pulsed laser having a pulse width of 100 ps or less (and a peak power density of 1 TW/cm² or more) were Examples 1 to 10 of the present invention, and the cutting tools subjected to laser irradiation under other laser conditions were Comparative Examples 1 to 4. The untreated cutting tool that was not subjected to laser irradiation was Comparative Example 5.

The residual stress of each cutting tool 10 was measured as follows. The residual stresses of the tool body 1 and the hard coating 2 (first layer 2a) were measured by using an X-ray residual stress measuring device manufactured by Pulstec Industrial Co., Ltd. and using a cosα method. A Cu tube was used as an X-ray source, and a WC (113) diffraction peak near 2θ = 154° and a TiCN (431) diffraction peak near 2θ = 133° were used to measure each residual stress. Using an X-ray shielding plate, only a width of 0.3 mm was exposed from the tip end of the edge tip of the cutting edge 3, and measurement was performed so that the stress value was obtained only in the laser-treated portion.

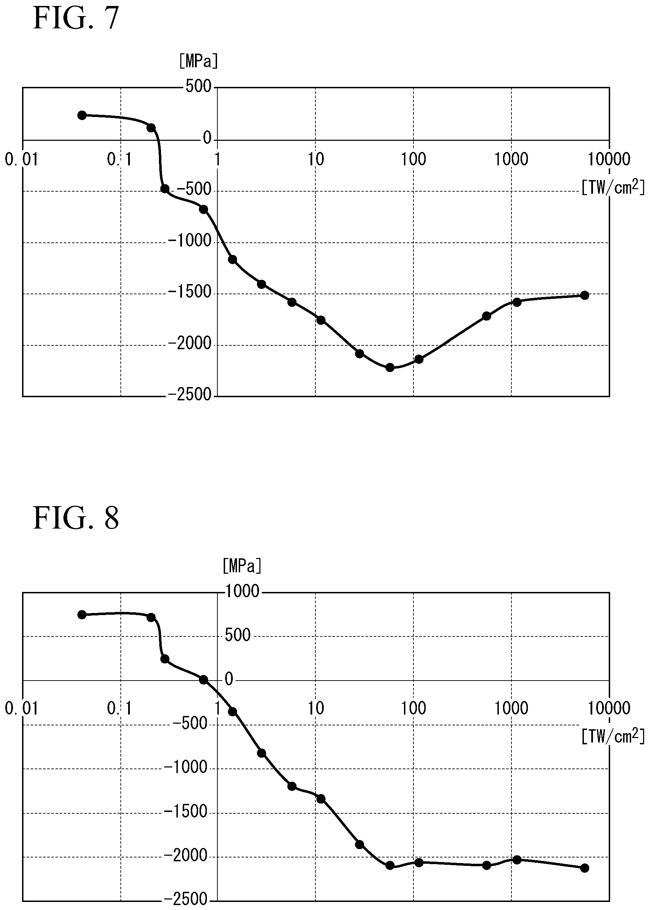

The relationship between the laser conditions and the measured residual stress values is shown in Tables 1 and Figs. 7 and 8 below. Fig. 7 is a graph showing the relationship between the peak power density (horizontal axis) of the laser peening step and the residual stress value (vertical axis) applied to WC, that is, the tool body 1. Fig. 8 is a graph showing the relationship between the peak power density (horizontal axis) of the laser peening step and the residual stress value (vertical axis) applied to TiCN, that is, the first layer 2a of the hard coating 2.

**TABLE 1**

| | Pulse width | Pulse energy [mJ] | Peak power density | WC residual stress [MPa] | TiCN residual stress [MPa] | Determination |
|---|---|---|---|---|---|---|
| Example 1 | 10 fs | 0.4 | 5.66 PW/cm² | -1520 | -2120 | B |
| Example 2 | 50 fs | 0.4 | 1.13 PW/cm² | -1580 | -2030 | B |
| Example 3 | 100 fs | 0.4 | 566 TW/cm² | -1720 | -2090 | B |
| Example 4 | 500 fs | 0.4 | 113 TW/cm² | -2140 | -2060 | A |
| Example 5 | 0.48 ps | 0.4 | 56.6 TW/cm² | -2220 | -2100 | A |
| Example 6 | 2 ps | 0.4 | 28.3 TW/cm² | -2080 | -1850 | A |
| Example 7 | 5 ps | 0.4 | 11.3 TW/cm² | -1760 | -1340 | B |
| Example 8 | 10 ps | 0.4 | 5.66 TW/cm² | -1580 | -1190 | B |
| Example 9 | 50 ps | 1 | 2.83 TW/cm² | -1410 | -820 | C |
| Example 10 | 100 ps | 1 | 1.42 TW/cm² | -1170 | -340 | C |
| Comparative Example 1 | 200 ps | 1 | 708 GW/cm² | -680 | 10 | D |
| Comparative Example 2 | 500 ps | 1 | 283 GW/cm² | -480 | 250 | D |
| Comparative Example 3 | 1 ns | 2 | 208 GW/cm² | 120 | 720 | D |
| Comparative Example 4 | 10 ns | 2 | 41 GW/cm² | 240 | 750 | D |
| Comparative Example 5 | Untreated product | | | -100 | 900 | - |

The criteria for determination in Table 1 are as follows.
A: The residual stress of TiCN (hard coating) is -1500 MPa or less, and the residual stress of WC (tool body) is -2000 MPa or less, so that the effect of increasing the compressive residual stress is particularly significantly obtained.
B: The residual stress of TiCN (hard coating) is -1000 MPa or less, and the residual stress of WC (tool body) is -1500 MPa or less, so that the effect of increasing the compressive residual stress is significantly obtained.
C: The residual stress of TiCN (hard coating) is 0 MPa or less, and the residual stress of WC (tool body) is -1000 MPa or less, so that the effect of increasing the compressive residual stress is significantly obtained.
D: The criteria of C are not satisfied, so that the effect of increasing the compressive residual stress is not significantly obtained. Specifically, the residual stress of TiCN (hard coating) exceeds 0 MPa, and the residual stress of WC (tool body) exceeds -1000 MPa.

As shown in Table 1, Examples 1 to 10 were determined as A, B, or C, so that the compressive residual stress was significantly increased. Specifically, it was confirmed that Examples 1 to 8 were determined as A or B, and a more significant effect was obtained. Particularly, it could be seen that Examples 4 to 6 were determined as A, and the compressive residual stress was particularly significantly increased. In Examples 1 to 3, the residual stress of TiCN (hard coating) reached -2000 MPa, but the residual stress of WC (tool body) did not reach -2000 MPa. It is considered that the reason for this is that when the pulse width becomes smaller than a predetermined value, the time for which an impact is applied to the workpiece is shortened, and the impact does not sufficiently reach the deep part of the workpiece.

On the other hand, Comparative Examples 1 to 4 were determined as D. Under the laser conditions of Comparative Examples 3 and 4 in which the pulse width was 1 ns or more, it was not possible to apply the compressive residual stress to WC (tool body). It is considered that the reason for this is the effect of heat.

Next, in order to investigate the relationship between the pulsed laser irradiation point intervals Dx and Dy and the anisotropy of the compressive residual stress, the laser peening step was performed on each of the cutting tools 10 under different laser conditions. As for the laser conditions, all the pulsed laser irradiation point intervals Dy in the direction parallel to the cutting edge 3 were set to 15 µm, and the pulsed laser irradiation point intervals Dx in the direction orthogonal to the cutting edge 3 were changed to 25 µm, 35 µm, and 50 µm for each of the cutting tools 10 such that Examples 11 to 13 were set. The laser conditions other than the above were set to the same as those in Example 5 described above.

The residual stress of each of the cutting tools 10 was measured in the same manner as in the measurement method described above. Then, the residual stress values σx and σy were measured by changing the X-ray incident direction in the x direction (the direction orthogonal to the cutting edge 3) and the y direction (the direction parallel to the cutting edge 3). The results are shown in Table 2 below.

**TABLE 2**

| | Pulsed laser irradiation point interval | | WC residual stress | | TiCN residual stress | |
|---|---|---|---|---|---|---|
| | Dx [µm] | Dy [µm] | σx [MPa] | σy [MPa] | σx [MPa] | σy [MPa] |
| Example 11 | 25 | 15 | -2170 | -2540 | -1890 | -2120 |
| Example 12 | 35 | 15 | -1880 | -2420 | -1400 | -1940 |
| Example 13 | 50 | 15 | -1340 | -2480 | -1150 | -1830 |

As shown in Table 2, in each of Examples 11 to 13, there was a difference between the residual stress in the x direction and the residual stress in the y direction of TiCN (hard coating), and there was a difference between the residual stress in the x direction and the residual stress in the y direction of WC (tool body). That is, it was confirmed that in Examples 11 to 13, anisotropy was applied to the compressive residual stress. In addition, there was a trend that the anisotropy became more significant as the difference between the pulsed laser irradiation point intervals Dx and Dy increased. For example, in Example 13, a difference of more than 1000 MPa could be provided between the residual stress in the x direction and the residual stress in the y direction of the WC (tool body).

### INDUSTRIAL APPLICABILITY

According to the method for manufacturing a cutting tool of the present invention, a high compressive residual stress can be stably applied to a hard coating and a tool body, thereby improving the fracture resistance of a cutting edge. Therefore, industrial applicability is achieved.

### REFERENCE SIGNS LIST

1: Tool body
2: Hard coating
2a: First layer (layer)
3: Cutting edge
10: Cutting tool
B: Spot
Dx, Dy: Pulsed laser irradiation point interval
L: Pulsed laser
S: Scanning direction

## Claims

1. A method for manufacturing a cutting tool,
in which the cutting tool includes a tool body made of a sintered alloy, a hard coating which is disposed on an outer surface of the tool body and has at least a layer formed of any of a carbide, a nitride, and a carbonitride, or a composite compound thereof, and a cutting edge which is formed at a ridge portion of the tool body and includes a portion of the hard coating located at the ridge portion,
the method comprising:
a laser peening step of directly irradiating the hard coating with a pulsed laser having a pulse width of 100 ps or less to apply compressive residual stress to the hard coating and a surface region of the tool body.

2. The method for manufacturing a cutting tool according to Claim 1,
wherein, in the laser peening step, the hard coating is irradiated with a pulsed laser having a pulse width of 10 ps or less.

3. The method for manufacturing a cutting tool according to Claim 1 or 2,
wherein, in the laser peening step, the hard coating is irradiated with a pulsed laser having a pulse width of 10 fs or more.

4. The method for manufacturing a cutting tool according to any one of Claims 1 to 3,
wherein, in the laser peening step, anisotropy is applied to the compressive residual stress of the hard coating and the tool body in a direction parallel to the cutting edge and in a direction orthogonal to the cutting edge.

5. The method for manufacturing a cutting tool according to any one of Claims 1 to 4,
wherein, in the laser peening step, a pulsed laser irradiation point interval in a direction parallel to the cutting edge and a pulsed laser irradiation point interval in a direction orthogonal to the cutting edge are caused to be different from each other.
